# EUROPEAN PATENT SPECIFICATION

(11) **EP 1 304 541 B1**
(45) Date of publication and mention of the grant of the patent: **24.08.2005**
(21) Application number: 02079245.3
(22) Date of filing: 15.10.2002
(51) Int. Cl.: G01B 5/00, G01B 5/255, G01M 17/06

(54) **Device for supporting the wheels of motor vehicles in general during their attitude check**
Vorrichtung zur Unterstützung der Räder von Kraftfahrzeugen während der Positionskontrolle
Dispositif pour supporter les roues d'un véhicule lors du contrôle de leur position

(30) Priority: 18.10.2001 IT AL20010012
(43) Date of publication of application: 23.04.2003
(73) Proprietor: CORGHI S.p.A., I-42015 Correggio (Reggio Emilia) (IT)
(72) Inventor: Gallese, Giacomo, 15011 Acqui Terme (Alessandria) (IT)
(74) Representative: Corradini, Corrado

(56) References cited:
- DE-A- 2 838 399
- US-A- 4 924 591
- PATENT ABSTRACTS OF JAPAN vol. 2000, no. 14, 5 March 2001 (2001-03-05) -& JP 2000 304661 A (OMRON CORP), 2 November 2000 (2000-11-02)

## Description

This invention relates in a totally general sense to the operations involved in checking and adjusting the attitude of motor vehicles in general.

More particularly, it relates to a device for supporting motor vehicle wheels during said operations.

For checking their attitude, motor vehicles are generally positioned on suitable vehicle lifts, the runways of which present at least two devices on which the front wheel tyres rest.

Devices are known for installation within a suitable seat in the runways of said vehicle lifts, and comprise a generally circular horizontal plate, which is supported by means enabling it to undergo rotation and translation within the plane in which it lies.

Said means generally consist of balls.

To prevent the plate being subjected to untimely and inconvenient impact and/or stresses, in particular while the vehicle is climbing onto the vehicle lift and descending therefrom, the known art provides for temporarily locking the plate to a base which rests on said lift.

For this purpose locking members such as latches or the like, all manually operated, are applied in various positions.

Such known systems have proved unsatisfactory because they require the intervention of the operator and involve undesirable time loss as he has to move from one to the other side of the vehicle lift each time the plate has to be locked and released.

Moreover to close the latches, the operator has to arrange the plate in a predetermined position in which the latches mate with their respective seats.

A known system is described in DE-A-28 38 399.

The main object of the present invention is to eliminate the aforestated problem.

Another object is to achieve said result within the framework of a simple, rational, robust, reliable and economical construction.

Said objects are attained by a self-adjusting device having the characteristic elements indicated in the claims.

In a totally general sense, to achieve the stated objective the operations involved in centering, locking and releasing the movable plate are accomplished by a device remotely controlled by the operator.

By this means all the objects of the invention are attained.

In this respect, he non longer has to intervene directly on each individual movable plate, hence he does not need to move from one side of the vehicle lift to the other.

Specifically, according to the invention, the movable plate is provided with a coaxial rear appendix, such as a stem or the like, with which there is associated an automatic centering, retention and release system carried by the vehicle lift structure.

Said system can comprise two profiled jaws movable relative to each other with rectilinear mutual approach and withdrawal movement in a direction transverse to said appendix or stem, in a manner symmetrical about its neutral or zero position, i.e. the position in which it lies exactly at the centre of the intended range of translational movements, in all directions, of the movable plate within the plane in which it lies.

In particular, the active portions or claws of said jaws are shaped such as to cause the appendix to automatically return to said neutral or zero position at the moment of closure of said jaws.

Finally, said two jaws can be placed under the control of at least one linear actuator, such as a cylinder-piston unit, preferably of pneumatic type.

The above-mentioned object can be attained by an apparatus according to the independent apparatus claim 1. Preferred embodiments are subject of the dependent claims 2-5.

The constructional and operational characteristics and merits of the invention will be apparent from the ensuing detailed description given with reference to the accompanying drawings in which:
Figure 1 is a schematic side view of a vehicle lift equipped with the invention.
Figure 2 is the section II-II of Figure 1 on an enlarged scale.
Figure 3 is the section III-III of Figure 2 on an enlarged scale.

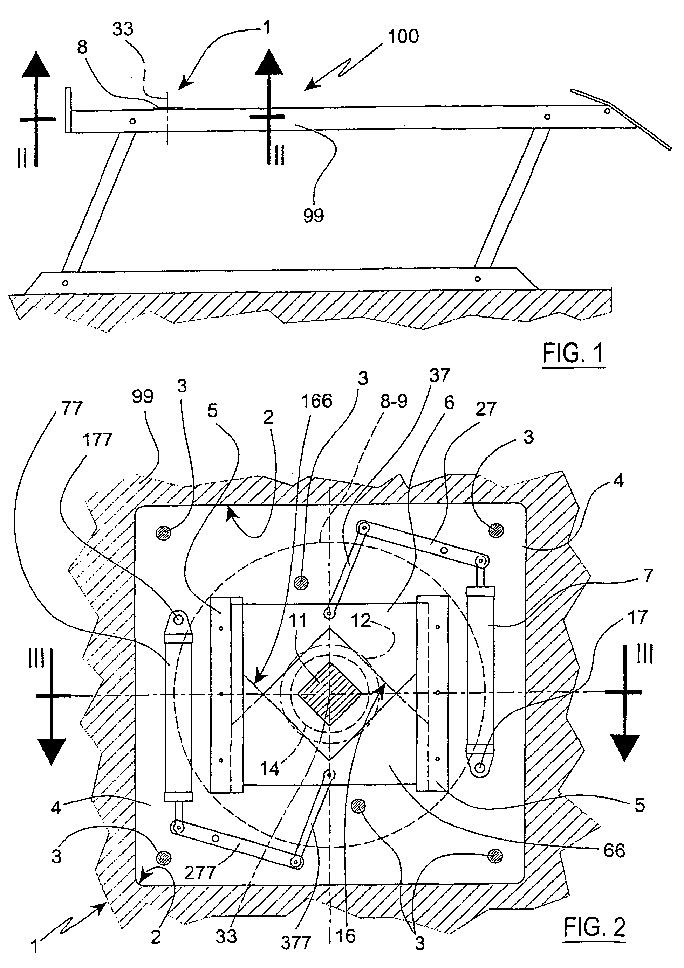

Said figures, and in particular Figure 1, show a vehicle lift indicated overall by the reference numeral 100, with two devices 1 of the invention resting on the front part of its runways 99.

The tyres of the steered wheels of the vehicle to be subjected to the attitude check, the details of which are not relevant herein, are rested on said devices 1.

In Figure 1 the reference numeral 33 indicates the vertical axis defining the neutral or zero position of the movable plate of the device 1.

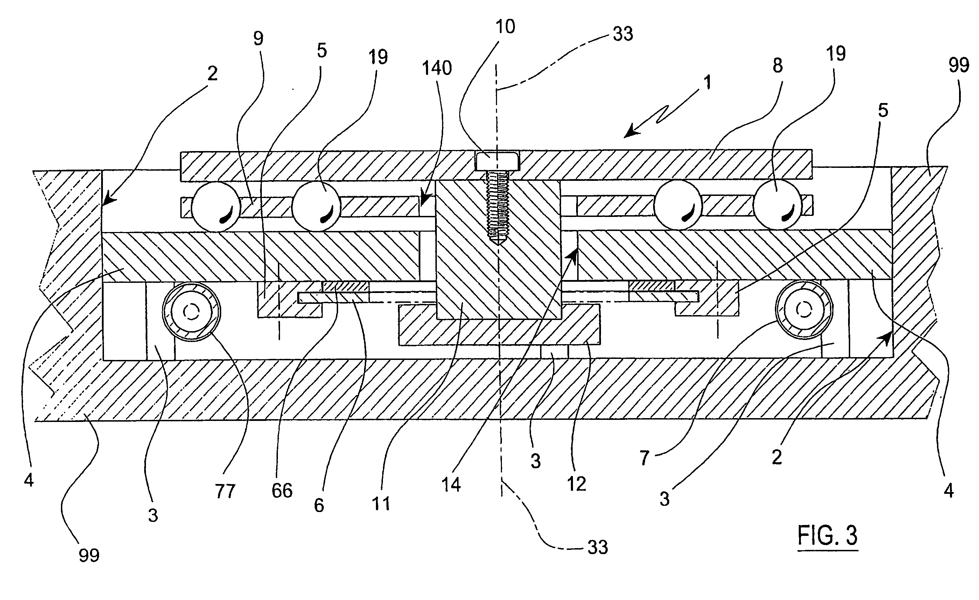

As can be seen in Figures 2 and 3, the runway 99 is provided in its upper surface with a recess 2, on the base of which a plate 4 is fixed via a series of columns 3.

Below said plate 4, and straddling said zero position axis 33, there are fixed two parallel coplanar rectilinear guides 5, which in the illustrated embodiment are positioned transverse to the axis of the runway 99.

In the facing sidewalls of said guides 5 there are provided the retention and slide tracks for a pair of jaws 6 and 66 which are driven to slide towards and away from each other with rectilinear movement in a direction transverse to and symmetrical about said axis 33.

Specifically, the upper pair of facing tracks provides the slideway for the jaw 66, the remaining pair of facing tracks providing the slideway for the jaw 6.

In Figure 2 the jaws 6 and 66 are shown spaced apart, the device being shown in its zero position.

Said two jaws are each in the form of a single profiled metal slab.

Said slabs forming said jaws 6 and 66 are positioned virtually in contact with each other and with the overlying plate 4 (Figure 3).

The facing edges of the two jaws 6 and 66, i.e. their claws, present respective central recesses 16 and 166 with diverging perpendicular sides (Figure 2) which open towards said axis 33.

As can be seen in Figure 2, the outward and return strokes of each jaw 6 and 66 are implemented by a double-acting pneumatic cylinder-piston unit 7, 77 which are made to extend and contract by the operator by means of a system for controlling the service valves of the cylinder-piston units 7, 77, which system can be either associated with the vehicle lift 100 or be installed on the unit control panel which is connected to the vehicle lift 100 to collect the data relative to the attitude of the vehicle being checked.

The body of the cylinder-piston unit 7, 77 is hinged at 17, 177 to the overlying plate 4, its piston rod being pivoted to the end of a rocker lever 27, 277 which in an intermediate position is pivoted to the plate 4 and at its opposite end is pivoted to a connecting rod 37, 377 connected to the centre of the rear edge of the respective jaw 6 or 66.

At the centre of the plate 4 there is a circular hole 14 coaxial with the axis 33, above the plate 4 there being a ball assembly supporting a circular plate 8.

The plate 8 extends slightly above the upper face of the runway 99, and is intended to support the front wheel of a vehicle.

The ball assembly comprises a disc 9 the diameter of which is of the same order of magnitude as the plate 8.

Said disc 9 presents at its centre a hole 140 having substantially the same diameter as the hole 14 of the plate 4, and at its periphery a regular plurality of identical holes housing metal balls of diameter greater than the thickness of the disc 9.

A preferably square pin 11 extending upwards from an anti-withdrawal disc 12 positioned against the jaw 6 is inserted through said central holes 14 and 140 from below.

The head of said square pin 11 is fixed to the underside of the plate 8 by a screw 10 which passes through this latter.

The circular profile of the disc 12 is greater than that of the gap made available by the recesses 16 and 166 in the jaws 6 and 66 respectively, when in their open configuration (see Figure 2)

The gap existing between the pin 11 and the hole 14 defines the range through which the plate 8 can slide in all directions within the plane in which it lies.

The dimensions of the plate 8 are less than those of the seat 2.

The operation of the invention is evident.

When the operator activates the cylinder-piston units 7, 77 while the steered wheels of a vehicle are climbing onto or descending from the movable plates 8 of the devices 1 of the vehicle lift 100, the pairs of jaws 6 and 66 tighten against the respective pins 11 in such as manner as to perfectly align them with the axes 33, and to securely retain them thereat. During the vehicle attitude check the operator deactivates said cylinder-piston units 7 and 77, so that the pins 11 are released and the plates 8 can both slide and rotate within the respective planes in which they lie, for example at the moment of a steering control test.

The merits and advantages of the invention are apparent from the aforegoing and from an examination of the accompanying figures.

## Claims

1. A device for supporting the wheels of vehicles in general during their attitude check, comprising a horizontal plate (8) which is supported in such a manner as to enable it to undergo rotation and translation within the plane in which it lies, about a position known as the zero position, and means able to disable the mobility of said plate, **characterised in that** said means comprise a lower central appendix (11) which is rigid with the plate, and with which there is associated an automatic centering, retention and release system, which is activated and deactivated by a remote command.

2. A device as claimed in claim 1, **characterised in that** said system comprises two jaws movable relative to each other with rectilinear mutual approach and withdrawal movement in a direction transverse to said appendix, in a manner symmetrical about said zero position.

3. A device as claimed in claim 2, **characterised in that** the active portions of said two jaws each present a central recess with converging sides which opens towards said zero position.

4. A device as claimed in claim 2, **characterised in that** the movement of said jaws is placed under the control of at least one linear actuator, such as a pneumatic cylinder-piston unit.

5. A device as claimed in claim 4, **characterised in that** said remote command is provided by an apparatus arranged to operate the service valves of said at least one operator, such as a remote controller available to the user.

## Patentansprüche

1. Vorrichtung zur Unterstützung der Räder von Fahrzeugen im Allgemeinen während ihrer Positionskontrolle, die eine Horizontalplatte (8), die so gelagert ist, dass sie in die Lage versetzt wird, innerhalb der Ebene, in der sie liegt, eine Drehung und Translation um eine als Nullstellung bekannte Position zu durchlaufen, und Einrichtungen aufweist, die zur Deaktivierung der Beweglichkeit der Platte in der Lage sind,
**dadurch gekennzeichnet, dass**
die Einrichtungen einen starr mit der Platte verbundenen unteren, mittigen Ansatz (11) umfassen, mit dem ein automatisches Zentrierungs-, Zurückhalte- und Freigabesystem verbunden ist, welches durch einen per Fernbedienung erteilten Befehl aktiviert und deaktiviert wird.

2. Vorrichtung nach Anspruch 1,
**dadurch gekennzeichnet, dass**
das System zwei im Verhältnis zueinander mit einer geradlinigen gegenseitigen Annäherungs- und in einer quer zu dem Ansatz verlaufenden Richtung erfolgenden Rückzugsbewegung bewegbare Klemmelemente umfasst, wobei dies um die Nullstellung herum symmetrisch erfolgt.

3. Vorrichtung nach Anspruch 2,
**dadurch gekennzeichnet, dass**
die aktiven Abschnitte der zwei Klemmelemente jeweils eine mittige Aussparung mit zusammenlaufenden Seiten aufweisen, die sich in Richtung der Nullstellung öffnet.

4. Vorrichtung nach Anspruch 2,
**dadurch gekennzeichnet, dass**
die Bewegung der Klemmelemente unter die Kontrolle mindestens eines Linearstellgliedes, wie zum Beispiel einer pneumatischen Zylinder-Kolbeneinheit gestellt wird.

5. Vorrichtung nach Anspruch 4,
**dadurch gekennzeichnet, dass**
der per Fernbedienung erteilte Befehl durch eine Vorrichtung bereitgestellt wird, die zur Betätigung der Serviceventile von mindestens einem Bediener, wie zum Beispiel durch eine für den Benutzer verfügbare Fernsteuerung, angeordnet ist.

## Revendications

1. Dispositif de support des roues de véhicules en général pendant la vérification de leur attitude, comprenant une plaque horizontale (8) qui est supportée de manière qu'elle permette une rotation et une translation dans le plan dans lequel se trouve la plaque, autour d'une position connue comme position de référence, et un dispositif qui permet de supprimer la mobilité de la plaque, **caractérisé en ce que** le dispositif comprend un appendice inférieur central (11) fixé rigidement à la plaque et auquel est associé un système automatique de centrage, de retenue et de libération, qui est activé et désactivé par une commande à distance.

2. Dispositif selon la revendication 1, **caractérisé en ce que** le système comprend deux mâchoires mobiles l'une par rapport à l'autre par un mouvement rectiligne de rapprochement et d'écartement mutuels en direction transversale à l'appendice, d'une manière symétrique par rapport à la position de référence.

3. Dispositif selon la revendication 2, **caractérisé en ce que** les parties actives des deux mâchoires présentent chacune une cavité centrale ayant des côtés convergents et qui débouche vers la position de référence.

4. Dispositif selon la revendication 2, **caractérisé en ce que** le déplacement des mâchoires est sous la commande d'au moins un organe de manoeuvre linéaire, tel qu'un vérin pneumatique.

5. Dispositif selon la revendication 4, **caractérisé en ce que** la commande à distance est donnée par un appareil destiné à commander les soupapes de service de l'organe de manoeuvre au moins, par exemple un organe de commande à distance disponible pour l'utilisateur.
